# EUROPEAN PATENT APPLICATION

(11) **EP 0 908 748 A1**
(43) Date of publication of application: **14.04.1999**
(21) Application number: 97203108.2
(22) Date of filing: 07.10.1997
(51) Int. Cl.: G02B 6/44

(54) **Communication cable with improved tensile member**

(71) Applicant: N.V. BEKAERT S.A., 8550 Zwevegem (BE)
(72) Inventor: Vandewalle, Gerard, (N.V. BEKAERT S.A.), 8540 Deerlijk (BE); Laeremans, Dirk, (BEKAERT TINSLEY), 1800 Vilvoorde (BE)
(74) Representative: Messely, Marc, Ir.

(57) **Abstract**

A communication cable (10) comprises optical fibres (16) for the transmission of information and a tensile member for preventing the optical fibres (16) from being put under load. The tensile member is a single steel wire (12) or an open steel strand of two to five steel wires (24, 26, 30). The tensile member is covered with a synthetic coating (14). The adhesion between the tensile member and the synthetic coating is so strong that in a standard adhesion test only small strips of synthetic coating with a length less than 1 cm can be pulled off manually from the coated tensile member so that the production of hydrogen is limited.

## Description

### Field of the invention.

The present invention relates to a communication cable which comprises optical fibres such as glass fibres for the transmission of information and one or more tensile members for preventing the optical fibres from being put under loads such as tensile loads.

### Background of the invention.

Communication cables with optical fibres and tensile members are known in the art.

EP-A-0 614 197 discloses a communication cable where the longitudinal watertightness or waterblocking capacity of the tensile member has been solved by providing a first synthetic material between the core wire and the layer wires of a steel strand and by covering the steel strand with a second synthetic material. Due to the fact that the first synthetic material does not melt below 150 °C, the first synthetic material remains within the steel strand and does not pollute the working floor when preheating the steel strand before the second synthetic material is applied around the steel strand.

US-A-5 344 713 discloses a tensile member for a communication cable where a solution is provided for the problem of hydrogen. Indeed, when steel is chosen as major material for the tensile member, moisture may infiltrate to the steel, corrosion will progress and cause production of hydrogen gas. This hydrogen gas may infiltrate into the optical fibre, increase the transmission attenuation and thus lower its reliability and life time. US-A-5 344 713 further teaches that the problem is not solved merely by increasing the corrosion resistance. For example, coating steel with zinc increases the corrosion resistance but also increases the production of hydrogen. In the same way, organic resins do not provide an adequate solution since they allow the hydrogen to pass through. US-A-5 344 713 solves the problem by providing the steel with a phosphate coating of more than 13 g/m². Experience has shown, however, that this is an unpractical high amount of phosphate. Coating the final steel wire with such heavy coatings of phosphate is not economical since this phosphating treatment is to be done on the enlarged surface of the finally drawn steel wire. Coating on an intermediate and thicker steel wire diameter, where the term 'intermediate' means before final drawing, would require even higher amounts of phosphate in order to reach the minimum final amount of 13 g/m². This, however, would involve a substantial mix with the drawing lubricants and would only postpone hydrogen production rather than avoid it.

### Summary of the invention.

It is an object of the present invention to provide for a tensile member for communication cables which is not expensive and which mitigates the problem of hydrogen production.

According to the invention, there is provided a communication cable which comprises optical fibres for the transmission of information and a tensile member for preventing the optical fibres from being put under load. The tensile member is a single steel wire or an open steel strand of two to five steel wires. The tensile member is covered with a synthetic coating with a strong adhesion to the steel of the tensile member: in a standard adhesion test (cfr. infra) only small strips of synthetic coating with a length less than 1 cm can be pulled off manually from the coated tensile member.
The terms 'open steel strand' refer to steel strand where, after an extrusion process, the synthetic material may fill up the interstices between the individual steel wires to such a degree that a longitudinal watertightness has been reached according to the DIN norm VDE 0472 Teil 811. In comparison with the embodiment of EP-A-0 614 197, the use of an open steel strand avoids the need to apply two synthetic materials for obtaining longitudinal watertightness. Here only one coating operation suffices.

The strong adhesion between the tensile member and the synthetic material is required in order to avoid hydrogen production.

If the tensile member is a single steel wire, its diameter ranges from 1 mm to 4 mm, and most preferably from 1.8 mm to 3.0 mm.

If the tensile member is an open steel strand of two to five individual steel wires, it may be an open 1x3, 1x4 or 1x5 strand, i.e. a strand of three, four or five steel wires which have been plastically deformed such their transversal cross-section is open and allows synthetic material to penetrate.

However, a 1x2-strand or a 2+2-strand are to be preferred as tensile member since they do not require a plastic deformation of the individual wires for their openness.
A 1x2-strand has only two wires so that there is no possibility of a central void between the wires.
A 2+2-strand has two groups of 2 wires each. Both groups are twisted with each other. A first group has two wires which may be twisted or not, and the second group has mainly untwisted wires (i.e. with an infinite twisting pitch or a pitch which is at least greater than 300 mm). 2+2-strands are known as such in the field of steel cord for tire reinforcement and have been disclosed, amongst others, in US-A-A 408 444.

In case of a steel strand the diameter of the wires may range from 0.30 mm to 2.0 mm, and preferably from 0.50 mm to 1.0 mm.

The strand embodiment is more expensive than the single wire embodiment since it requires further drawing and a final stranding or twisting step. It has the advantage, however, of providing an increased flexibility due to the thinner filament diameters.

The synthetic coating around the tensile member is preferably a polyester such as polyethylene terephtalate (= PET) or polyethylene naphtalate (= PEN).
Within the context of the present application the terms "polyethylene terephtalate" denote not only homopolymers of ethylene therephtalate but also copolymers of ethylene terephtalate containing not more than 20% of other copolymerized units, e.g. derived from other acids than terephtalic acid, such as isophtalic acid or from other glycols than ethylene glycol. The polymer may also contain mixtures of polymers in order to modify certain of the properties thereof.
Polyethylene terephtalate has the advantage of having good barrier properties e.g. to hydrogen and of having a good adhesion with a properly prepared steel wire without requiring a primer to ensure that adhesion.
Polyethylene naphtalate has even better barrier properties than polyethylene terephtalate but has the drawback of being more expensive than polyethylene terephtalate.
In case of a polyester the thickness of the coating ranges from 25 µm to 250 µm, and preferably from 40 µm to 100 µm. A thicker polyester coating is possible but not economical. For embodiments where a thicker coating is required an additional coating of e.g. polyethylene may be provided on an initial coating of polyester to reach the desired coating thickness.

The synthetic coating around the tensile member can also be a polyolefin such as polyethylene, polypropylene or as polyvinylchloride. Here a primer is required to obtain an acceptable adhesion bond between the PVC and the steel. The primer can be a cured solvent or a water-borne primer, or it can be a hot melt adhesive primer. The advantage of these polyolefins, however, is that thicker coatings than with polyesters can be obtained in an economical way. The coating thickness may vary here from 0.1 mm to 6.0 mm.

The present invention is not limited to a particular type or construction of communication cable. The present invention is applicable to all types of communication cable provided with a tensile member of steel. The tensile member may be located centrally in the communication cable with the optical fibres around the tensile member or excentrically, i.e. the optical fibres centrally. The communication cable may be of the slotted core type or not.

### Brief description of the drawings.

The invention will now be described into more detail with reference to the accompanying drawings wherein
- FIGURE 1 is a transversal cross-section of a communication cable according to the invention;
- FIGURE 2 is a transversal cross-section of part of a communication cable of the slotted core type;
- FIGURE 3 is a transversal cross-section of a tensile member for a communication cable;
- FIGURE 4 illustrates two steps in a test procedure for evaluating the adhesion of a synthetic coating to a steel wire.

### Description of the preferred embodiments of the invention.

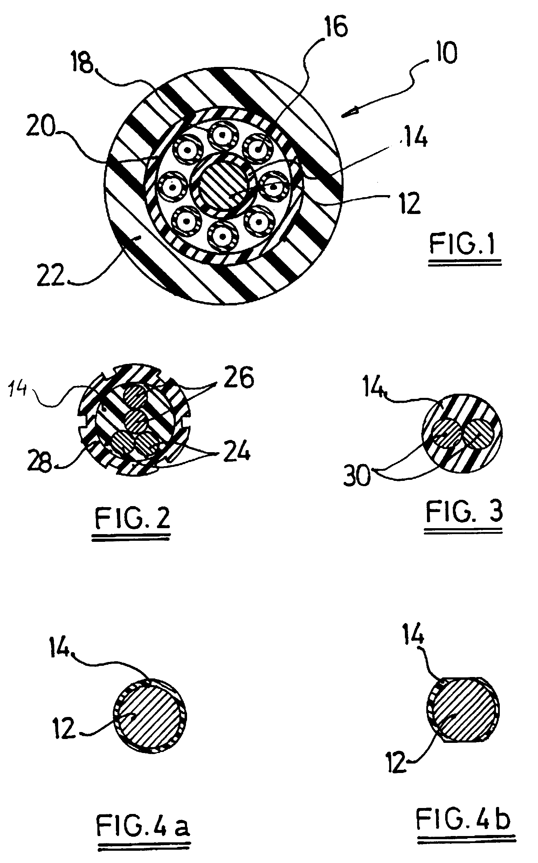

FIGURE 1 illustrates the transversal cross-section of a communication cable 10 which comprises a single steel wire 12 as tensile member in its center. The steel wire 12 is coated with a layer 14 of polyester. Optical fibres 16 within a polyethylene jacket 18 are arranged around the tensile member. A supplementary protection is provided by means of a thin layer 20 of paper tapes and/or aluminium and the whole is covered by a polyethylene sheath 22.

FIGURE 2 illustrates part of a communication cable of the slotted core type. A 2+2-strand 24, 26 functions as tensile member. The 2+2-strand has a group of two twisted wires 24 and a group of two untwisted wires 26. The first group and the second group are twisted around each other. A sheath of polyester 14 is provided around the 2+2-strand 24, 26 and the whole is surrounded by a layer of polyethylene 28 where slots are made to locate the optical fibres.

FIGURE 3 illustrates a transversal cross-section of a tensile member formed by a 1x2-strand. The 1x2-strand is formed by two twisted steel wires 30.

A standard test to evaluate the adhesion or bond between the synthetic coating and the tensile member is carried out as follows. Referring to FIGURE 4a, a length of a steel wire 12 with a synthetic coating 14 is taken. The synthetic coating 14 is removed in the longitudinal direction over about five cm length on both sides of the wire, diametrically towards each other by means of the sharp side of a cutting knife. A cross-section such as shown in FIGURE 4b is obtained. By means of the blunt side of the cutting knife the synthetic coating 14 is slightly lifted. Finally, the synthetic coating is tried with the fingers to be pulled off the steel wire. An evaluation is made according to following observations :

| **Rating** | **Description** |
|---|---|
| **0** more than excellent | Nothing can be removed from the wire, the lifted coating breaks right away when pulling. |
| **1** excellent | No further coating can be pulled off with the fingers but very small parts can be removed by means of a knife. |
| **2** good | Small strips of less than 1 cm can be pulled off with great difficulty or by pulling very carefully. |
| **3** less good | Strips of about 2 cm can be pulled off with some difficulty or by pulling carefully. |
| **4** bad | Strips of 2 cm can be pulled off very easily. |
| **5** bad | The film is hanging loose after having removed the coating on both sides. |

All tested tensile members obtaining a rating of 0,1 or 2 are within the scope of the present invention and have a strong adhesion between the tensile member and the synthetic coating.

In case the tensile member is a strand the above standard adhesion test is applied to an individual wire of the steel strand.

The method of manufacturing a tensile member for use in a communication cable according to the invention is straightforward. The steel wire or wires are drawn until their final diameter and, in case of a strand embodiment, are twisted to the strand. The surface of the wire(s) is properly cleaned, the wire or the strand is heated and is coated with a synthetic coating by means of a well known extrusion process. A zinc coating is avoided on the steel wires before extrusion, but the steel wires may be covered with up to 2.5 g/m² of phosphate, which is substantially lower than the amounts disclosed in US-A-5 344 713. The extruded synthetic material preferably has a melt viscosity measured at about 280 °C ranging from 100 Pa.s to 2500 Pa.s for a corresponding shear rate going down from 10000 1/s to 1 1/s. A still more preferable value is a melt viscosity ranging from 200 Pa.s to 1000 Pa.s for a corresponding shear rate going down from 5000 1/s to 20 1/s. The stranding step and the extrusion step may be done within the same manufacturing line.

The following test has been carried out to examine the production of hydrogen.
A tensile member coated with polyethylene according to the prior art is compared with a tensile member coated with polyester according to the prior art. The polyethylene coating respectively the polyester coating is partially removed to the same extent from both tensile members so that the steel wires become exposed to the same degree to the environment. Both tensile members are put in a closed bottle filled with diluted HCl. The amount of produced hydrogen is measured by means of gas chromatography and is expressed in microliter per meter of tensile member. The results are summarized below.

### 1. Treatment with a HCl normality of 1.2 N :

after one hour of reaction :
   **invention** : PET coated tensile member : 48 µl/m
   prior art : PE coated tensile member : 4125 µl/m
after two hours of reaction :
   **invention** : PET coated tensile member : 154 µl/m
   prior art : PE coated tensile member : 5310 µl/m

### 2. Treatment with a HCl normality of 2.0 N :

after one hour of reaction :
   **invention** : PET coated tensile member : 185 µl/m
   prior art : PE coated tensile member : 2275 µl/m
after two hours of reaction :
   **invention** : PET coated tensile member : 237 µl/m
   prior art : PE coated tensile member : 2725 µl/m.

The term "normality refers to a concentration of a solution expressed in gram-equivalents of active material per dm³ of solution.

A supplemental advantage of a PET coating is that it has an improved resistance against ageing if compared with e.g. a PE coating. This can be demonstrated by measuring the impedance of the coating. The impedance of a PET coating remains relatively stable in time whereas the impedance of a PE coating drops in the first 200 hours. This is due to cracks and pores caused by the water absorption of PE.

A suitable steel composition for the tensile member may be along following lines. The carbon content ranges from 0.40 to 0.85 per cent, the manganese content ranges from 0.30 to 0.90 per cent, the silicon content ranges from 0.15 to 0.50 per cent. The sulphur content and the phosphorus content are each kept below 0.05 per cent. The breaking load of the steel strand is at least 3500 Newton and the tensile strength of the steel wires is at least 1300 MPa. The modulus of elasticity of the strand embodiment is at least 150 000 MPa, the modulus of elasticity of the steel wire embodiment is at least 190 000 MPa.

## Claims

1. A communication cable comprising
optical fibres for the transmission of information and
a tensile member for preventing the optical fibres from being put under load,
said tensile member being a single steel wire or an open steel strand of two to five steel wires,
said tensile member being covered with a synthetic coating,
the adhesion between the tensile member and the synthetic coating being so strong that in a standard adhesion test only small strips of synthetic coating with a length less than 1 cm can be pulled off manually from the coated tensile member.

2. A communication cable according to claim 1
wherein the tensile member is a single steel wire.

3. A communication cable according to claim 1
wherein the tensile member is an open steel strand of two to five steel wires.

4. A communication cable according to claim 3
wherein said steel strand is a 1x2-strand.

5. A communication cable according to claim 4
wherein said steel strand is a 2+2-strand.

6. A communication cable according to any one of the preceding claims
wherein said synthetic coating is a polyester.

7. A communication cable according to any one of claims 1 to 5
wherein said synthetic coating is a polyvinylchloride and wherein a primer ensures the adhesion between the synthetic coating and the tensile member.

8. A communication cable according to claim 7
wherein said primer is on a solvent basis.

9. A communication cable according to claim 7
wherein said primer is on a hot melt basis.

10. A communication cable according to claim 7
wherein said primer is a water-borne primer.

11. A communication cable according to any one of the preceding claims
wherein said tensile member is arranged in the center and wherein said optical fibres are arranged around the tensile member.

12. A communication cable according to claim 11
wherein said optical fibres are arranged in slots which are made in a synthetic material that is laid around the tensile member.
